# EUROPÄISCHE PATENTSCHRIFT

(11) **EP 2 953 843 B1**
(45) Veröffentlichungstag und Bekanntmachung des Hinweises auf die Patenterteilung: **16.08.2017**
(21) Anmeldenummer: 14700809.8
(22) Anmeldetag: 18.01.2014
(51) Int. Cl.: B62D 29/04, B62D 25/00, B62D 25/20

(54) **FASERVERSTÄRKTE VERSTEIFUNGSSTREBE, HERSTELLVERFAHREN UND KRAFTFAHRZEUGKAROSSERIE**
FIBER-REINFORCED REINFORCEMENT STRUTS, PRODUCTION METHOD, AND MOTOR VEHICLE BODY
ENTRETOISES DE RENFORT RENFORCÉES PAR DES FIBRES, PROCÉDÉ DE FABRICATION ET CARROSSERIE DE VÉHICULE AUTOMOBILE

(30) Priorität: 09.02.2013 DE 102013002365
(43) Veröffentlichungstag der Anmeldung: 16.12.2015
(73) Patentinhaber: Daimler AG, 70327 Stuttgart (DE)
(72) Erfinder: SALKIC, Asmir, 89077 Ulm (DE)
(74) Vertreter: JENSEN & SON
(86) Internationale Anmeldenummer: PCT/EP2014/000131
(87) Internationale Veröffentlichungsnummer: WO 2014/121891

(56) Entgegenhaltungen:
- DE-A1-102010 053 850
- DE-A1-102011 107 207
- DE-A1-102011 109 044
- US-A1- 2010 266 809

## Beschreibung

Die Erfindung betrifft eine faserverstärkte Versteifungsstrebe und ein Herstellverfahren sowie eine Kraftfahrzeugkarosserie mit einer solchen Versteifungsstrebe. Versteifungsstreben werden sowohl beim Bau von selbsttragenden Karosserien als auch bei klassischen Rahmenkarosserien eingesetzt. Insbesondere bei Cabrios, deren Karosserie-Steifigkeit infolge des fehlenden Dachs vermindert ist, werden Versteifungsstreben oft diagonal am Unterboden verbaut um das Verwinden während des Fahrbetriebs zu reduzieren. Es ist auch möglich, Streben dort einzusetzen, wo eine vermehrte Vibrationsneigung zu erwarten ist. Dadurch wird gezielt zusätzliche Steifigkeit erhalten und die Eigenfrequenz des jeweiligen Karosseriebereichs erhöht, sodass die Vibrationen in einem Frequenzband stattfinden, das nicht als störend empfunden wird. Dies betrifft insbesondere Bereiche der Karosserie, in denen Kräfte und/oder Momente eingeleitet werden, also etwa im Bereich der Lagerung der Motor-/Getriebeeinheit sowie im Bereich der Radantriebe und/oder Fahrwerksaufhängung. Versteifungsstreben, die in erster Linie zur Anpassung des Vibrationsverhaltens eingesetzt werden, werden auch Noise-Vibration-Harshness-Streben (NVH) genannt.

Es ist sowohl bekannt, Versteifungsstreben aus Stahl bzw. anderen metallischen Werkstoffen, als auch aus faserverstärkten Kunststoffen (FVK) herzustellen. Der Einsatz von faserverstärkten Kunststoffen in Versteifungsstreben ist bisher jedoch mit Nachteilen verbunden. So tritt bei einer direkten Verschraubung der Strebe mit der Karosserie unvermeidlich aufgrund Kriechen des Strebenmaterials Setzen der Schraubverbindung auf, das dazu führt, dass die Vorspannkraft der Schraubverbindung nachlässt und evtl. regelmäßiges Nachziehen nötig ist. Ferner besteht ohne Gegenmaßnahmen die Gefahr, dass sich aufgrund der Leitfähigkeit der Verstärkungsfasern in Kombination mit eindringender Feuchtigkeit ein Lokalelement bildet, was zu Korrosion führen kann.

Die gattungsgemäße DE 10 2010 053 850 A1 betrifft eine Kraftfahrzeugkarosserie mit faserverstärkten Versteifungsstreben. Die Versteifungsstreben dort weisen beidenends einen Anbindungsabschnitt auf, mit dem sie mit der Karosserie verbunden sind. Bei den Anbindungsabschnitten kann es sich um geklebte Ringschuhe handeln, die einem Ringkabelschuh ähneln. Die Klebeverbindung weist jedoch gegenüber dem Strebenkörper eine vergleichsweise geringe Steifigkeit auf, weshalb dort die größten Verformungen stattfinden und die Verbindung daher versagenskritisch ist. Die Gesamtsteifigkeit der Strebe wird maßgeblich durch die geringe Steifigkeit der Klebeverbindung bestimmt und nicht durch die Steifigkeit des Strebenkörpers aus FVK. Die WO 2011 095278 A1 betrifft ein Herstellverfahren für ein Faserverbundbauteil wie etwa eine Koppelstange, die endseitig Krafteinleitungsvorrichtungen aufweist. Die Krafteinleitungsvorrichtungen werden nicht detailliert beschrieben; es handelt sich dabei um einfache Durchgangsbohrungen in den Endbereichen der Koppelstange, die bei der Verschraubung mit einer Karosserie die erwähnten Setzerscheinungen zeigen. Ausgehend von diesem Stand der Technik ist es Aufgabe der vorliegenden Erfindung, eine verbesserte faserverstärkte Versteifungsstrebe bereitzustellen, die die Nachteile bekannter Versteifungsstreben beseitigt und insbesondere eine größere Gesamtsteifigkeit bereitstellt, korrosionsunempfindlich ist und eine wartungsfreie Anbindung an eine Karosserie erlaubt.

Diese Aufgabe wird durch eine faserverstärkte Versteifungsstrebe mit den Merkmalen des Anspruchs 1 und ein Herstellverfahren mit den Merkmalen des Anspruchs 2 gelöst.

Darüber hinaus ergibt sich die Aufgabe, eine Kraftfahrzeugkarosserie mit zumindest einer Versteifungsstrebe zu schaffen, die sich durch eine verbesserte Steifigkeit und Crashsicherheit auszeichnet.

Diese Aufgabe wird durch eine Kraftfahrzeugkarosserie mit den Merkmalen des Anspruchs 4 gelöst. Eine erste Ausführungsform der faserverstärkten Versteifungsstrebe weist ein langgestrecktes Strebenprofil aus einem faserverstärkten Material und wenigstens einen endseitigen Anbindungsabschnitt auf. Im Anbindungsabschnitt erstreckt sich mindestens eine Durchtrittsöffnung senkrecht zur Längsachse des Strebenprofils. Über das Strebenprofil ist im Anbindungsabschnitt ein Anbindungsschuh mit einem geschlossenen Querschnitt, bzw. ein ringförmiger Anbindungsschuh oder Ringschuh, geschoben, dessen Innenquerschnitt mit dem Außenquerschnitt des Strebenprofils korrespondiert. Auch der Anbindungsschuh weist eine Durchtrittsöffnung auf, die zumindest teilweise über der Durchtrittsöffnung des Strebenprofils liegt.

Die erfindungsgemäße Versteifungsstrebe kann natürlich auch zwei endseitige Anbindungsabschnitte jeweils mit Durchtrittsöffnungen aufweisen; es ist aber auch möglich, dass die Versteifungsstrebe an einem Ende auf eine andere Weise befestigt wird, beispielsweise durch Klemmen oder Kleben.

Die Durchtrittsöffnungen des Strebenprofils und des Anbindungsschuhs müssen sich zumindest soweit überlappen, dass eine Schraube oder eine ähnliche Befestigungsvorrichtung dadurch gesteckt werden kann, bevorzugt sind sie jedoch deckungsgleich. Die Durchtrittsöffnung dient dazu, die erfindungsgemäße Versteifungsstrebe mit einer Karosserie zu verbinden.

Im Gegensatz zu bekannten faserverstärkten Versteifungsstreben erfolgt die Krafteinleitung von der Schraube auf die Strebe bei der vorliegenden Strebe formschlüssig. Das bedeutet, dass die Krafteinleitung in die FVK-Strebe über den Anbindungsschuh erfolgt und nicht unmittelbar über den Schraubenkopf. Die Durchtrittsöffnung ist besonders bevorzugt so ausgestaltet, dass die Schraube seitlich nicht an dem FVK-Material der Strebe anliegt. Hierzu ist der Durchmesser der Durchtrittsöffnung größer ausgestaltet als der Schraubendurchmesser. Hierdurch wird verhindert, dass im Lastfall in Längsrichtung der Strebe eine Krafteinleitung der Schraube in das Innere des FVK-Materials erfolgt. Der Anbindungsschuh liegt auf der anderen Seite (karosserieseitig) an dem zu verbindenden Karosserieteil an, so dass auch auf dieser Seite die Krafteinleitung in die FVK-Strebe über den Anbindungsschuh erfolgt.

Vorteilhaft wird die Kraft nicht durch eine versagenskritische Klebeverbindung geleitet, die zudem noch großen Verformungen unterliegt und nur geringe Steifigkeit aufweist. Die Steifigkeit der erfindungsgemäßen Strebe wird wesentlich von der Steifigkeit des Strebenprofils bestimmt und nicht durch die vergleichsweise geringe Steifigkeit der Klebeverbindung wie bisher. Der Anbindungsschuh kann vorteilhaft durch gut automatisierbare Fertigungsverfahren wie Gießen, Extrudieren oder Strangpressen aus metallischen Werkstoffen hergestellt werden, wodurch die Fertigungskosten gesenkt werden können. Die Fertigung von mitunter komplexen Geometrien, beispielsweise aus Aluminium, ist von standardisierten Industrieprofilen bekannt.

Aufgrund der hohen Flexibilität der genannten Herstellverfahren sind der Querschnittsform des Strebenprofils kaum Grenzen gesetzt; in Kombination mit der hohen Flexibilität der Herstellung von FVK-Halbzeugen durch automatisierte Textiltechnologien wie Wirken, Stricken, Legen oder Pultrusion ergibt sich die Möglichkeit, eine Versteifungsstrebe konstruktiv sehr genau an einen zu erwartenden Lastfall anzupassen. Besonders bevorzugt wird die Strebe aus CFK in einem Pulltrusions-Verfahren hergestellt, bei dem quasi Endlos-Strukturen anfallen, die auf die erforderlichen Maße abgelängt werden können. Da die Versteifungsstrebe in der Regel auf Zug belastet wird, ist es besonders vorteilhaft, wenn die Faserausrichtung innerhalb des Strebenprofils im Wesentlichen parallel der Längsachse verläuft. Bei dem Strebenprofil kann es sich um ein Voll- oder Hohlprofil handeln.

In einer weiteren Ausführungsform kann der Anbindungsschuh zumindest an einem Teil seiner Strebenprofil-Kontaktfläche mit dem Strebenprofil verklebt sein. Vorteilhafterweise befindet sich an einer Kontaktkante des Anbindungsschuhs und des Strebenprofils ein Klebstoffkragen.

Der Klebstoffkragen entsteht bei der Verklebung des Anbindungsschuhs unter Klebstoffüberschuss und ist der Funktionserfüllung dienlich. Er soll verhindern, dass Feuchtigkeit und/oder Schmutzpartikel zwischen den Anbindungsschuh und das Strebenprofil gelangen und dort Korrosion und/oder abrasiven Verschleiß hervorrufen. Durch die Abdichtung des Spaltes und/oder die elektrische Isolation des Anbindungsschuhs von den Verstärkungsfasern des Strebenprofils ist Kontaktkorrosion des Anbindungsschuhs aufgrund leitfähigen Kontakts mit den Verstärkungsfasern nahezu ausgeschlossen.

Gemäß einer noch weiteren Ausführungsform kann eine Hülse in die übereinander liegenden Durchtrittsöffnungen des Strebenprofils und des Anbindungsschuhs eingesetzt sein. Bei der Hülse handelt es sich vorteilhaft um eine Bundhülse, deren Bund auf dem Anbindungsschuh strebenseitig aufliegt.

Besonders bevorzugt ist die Bundhülse strebenseitig so weit aufgeweitet, dass sie den Schraubenkopf seitlich überragt. Ein direkter Kontakt zwischen dem Anbindungsschuh und dem Schraubenkopf wird hierdurch verhindert. Die Krafteinleitung in den Anbindungsschuh erfolgt somit über die Bundhülse. Die Flächenpressung auf das FVK-Material beim Zuziehen der Schraubverbindung erfolgt über den Bund, bzw. die Aufweitung der Hülse und nicht unmittelbar über den Schraubenkopf. Da die Bundhülse bis zum zu verbindenden Karosserieteil durch das FVK-Material hindurchreicht, ist die gesamte Schraube ohne Kontakt zum FVK-Material, insbesondere vom FVK-Material elektrochemisch isoliert. Hierdurch kann die elektrochemische Korrosion zwischen Schraube und FVK-Strebe sehr effektiv verhindert werden. Dies ist beispielsweise für eine Materialpaarung aus Stahlschraube und CFK-Strebe von besonderer Bedeutung.

Der Bund fungiert auch als Anschlag, der es einem Monteur erleichtert, die korrekte längsaxiale Ausrichtung der Hülse zu finden. Die Hülse erstreckt sich entlang ihrer Längsachse von der Oberseite des Anbindungsschuhs bis zu dessen Unterseite. Wird die Versteifungsstrebe mit einer Schraube montiert, so wird die Schraubenvorspannkraft nicht durch das faserverstärkte Strebenprofil geleitet, sondern nur durch die Hülse. Dadurch werden die sonst bei Schraubverbindungen in faserverstärkten Bauteilen üblichen Setzerscheinungen vermieden. Die erfindungsgemäße Versteifungsstrebe kann also dauerfest und ohne ständiges Nachkontrollieren der Schraubverbindung mit einer Karosserie verbunden werden.

Ferner kann die Versteifungsstrebe zwei endseitige Anbindungsabschnitte aufweisen, zwischen denen ein weiterer Anbindungsabschnitt vorliegt. Der weitere Anbindungsabschnitt weist auch einen Anbindungsschuh auf, der über das Strebenprofil geschoben ist.

Der Anbindungsschuh, der in dem weiteren mittig angeordneten Anbindungsabschnitt verwendet wird, weist im Grunde den gleichen Aufbau auf, wie die Anbindungsschuhe der endseitigen Anbindungsabschnitte: Sein Innenquerschnitt korrespondiert mit dem Außenquerschnitt des Strebenprofils und er weist eine Durchtrittsöffnung auf, jedoch kann er sich hinsichtlich der Länge und/oder der Gestaltung der Außenkontur unterscheiden. Auch der mittig angeordnete Anbindungsabschnitt kann eine Durchtrittsöffnung aufweisen, die über der Durchtrittsöffnung des Anbindungsschuhs positioniert wird.

Des Weiteren kann der Anbindungsschuh aus einem Metall bestehen, wobei Aluminium oder eine Aluminiumlegierung vorteilhaft ist. Die Hülse kann auch aus einem Metall bestehen, wobei Aluminium, eine Aluminiumlegierung oder ein rostfreier Edelstahl aus Korrosions- und Wartungsgründen vorteilhaft sind. Alternativ oder zusätzlich kann der Klebstoff Feststoffpartikel enthalten, bevorzugt kugelförmige Feststoffpartikel, besonders bevorzugt Glaskugeln.

Besonders bevorzugt ist die Kombination einer Strebe aus kohlenstofffaserverstärktem Kunststoff (CFK) mit einem verklebten Anbindungsschuh aus einer Aluminiumlegierung, sowie mit einer Hülse aus Aluminiumlegierung.

Die Feststoffpartikel bzw. Glaskugeln im Kleber sollen bewirken, dass der Spalt zwischen dem Anbindungsschuh und dem Strebenprofil über den gesamten Umfang die gleiche Spaltweite hat. Die Feststoffpartikel, insbesondere Glaskugeln, haben den weiteren Vorteil, dass der Klebespalt beim Anpressen der Strebe während dem Anschrauben der Strebe an die Karosserie nicht vollständig zusammengedrückt werden kann. Somit wird verhindert, dass der noch flüssige Klebstoff versehentlich vollständig aus dem Klebespalt herausgedrückt wird. Auch unter Krafteinleitung und/oder eventueller Durchbiegung verändert sich der Spaltabstand kaum, da durch den Feststoffzusatz der Elastizitätsmodul des ausgehärteten Klebers erhöht ist.

Darüber hinaus weist das Strebenprofil einen U-förmigen Querschnitt auf. Es ist damit möglich, bei einem geringen Gewicht ein vergleichsweise hohes axiales Flächenträgheitsmoment bereitzustellen, was zu einer erhöhten Sicherheit gegen Knicken führt. Insbesondere im Crash-Fall führt dies dazu, dass die Karosserieintegrität deutlich länger erhalten bleibt. Ferner lässt sich der Schraubenkopf einer zur Anbindung verwendeten Schraube gut in dem U-Profil "verstecken", er überragt es nicht. Bei bekannten faserverstärkten Versteifungsstreben wurden die Schraubenköpfe dadurch versteckt, dass einzelne Fasern geöffnet wurden und dann manuell über dem Kopf drapiert wurden. Die erfindungsgemäße Neuerung bedeutet also eine deutliche Arbeitszeiteinsparung bei der Montage der Strebe und somit eine verbesserte Wirtschaftlichkeit.

Eine erste Ausführungsform des Herstellverfahrens für die faserverstärkte Versteifungsstrebe in der Ausführungsform mit geklebtem Anbindungsschuh umfasst folgende Schritte:
a) Bereitstellen des Strebenprofils, des zumindest einen Anbindungsschuhs und des Klebstoffs,
b) Auftragen eines Klebstoffüberschusses auf den endseitigen Anbindungsabschnitt des Strebenprofils und/oder auf eine Innenfläche des Anbindungsschuhs,
c) Positionieren des Anbindungsschuhs in dem endseitigen Anbindungsabschnitte des Strebenprofils, sodass die Durchtrittsöffnung des Anbindungsschuhs zumindest teilweise über der Durchtrittsöffnung des Strebenprofils liegt,
d) Ausbilden eines Klebstoffkragens an zumindest einer Kontaktkante der Anbindungsschuhe und des Strebenprofils.

Nach dem Ausbilden des Klebstoffkragens im Schritt d) und dem Aushärten des restlichen Klebstoffs ist der Spaltbereich zwischen dem Anbindungsschuh und dem Strebenprofil bestens vor Feuchtigkeit und Schmutz geschützt, wodurch Korrosion auch bei Kontakt der metallischen Hülse und/oder Schraube mit den (elektrisch leitfähigen) Verstärkungsfasern verhindert werden kann. Sollte es gewünscht sein, den Anbindungsschuh ohne Klebstoff einzusetzen, kann das Verfahren natürlich auch ohne die Schritte b) und d) ausgeführt werden.

In einer weiteren Ausführungsform kann nach dem Schritt d) der folgende Schritt ausgeführt werden:
e) Bereitstellen einer Hülse und Einführen der Hülse in die zumindest teilweise übereinander liegenden Durchtrittsöffnungen des Anbindungsschuhs und des Strebenprofils.

Wie bereits beschrieben, kann durch Einsatz der Hülse die Druckbelastung aus der Schraubenvorspannung durch die Hülse umgeleitet werden, so dass das faserverstärkte Strebenprofil diese Klemmkraft nicht aufnehmen muss. So kann einem Setzen der Schraubverbindung aufgrund von Werkstoffrelaxation im Strebenprofil wirksam vorgebeugt werden, wodurch eine einmal mit einem vorbestimmten Anzugsmoment befestigte Schraube nicht mehr regelmäßig nachgezogen werden muss.

Eine erste Ausführungsform der erfindungsgemäßen Kraftfahrzeugkarosserie weist zumindest eine erfindungsgemäße Versteifungsstrebe auf.

Die Strebe kann je nach individuellem Anforderungsprofil an verschiedenen Einsatzorten verbaut werden. Etwa diagonal am Unterboden zur Verminderung der Karosserieverwindung um die Fahrrichtungsachse, zwischen Fahrwerkskomponenten, an Krafteinleitungspunkte wie der Motor-/Getriebeeinheit, an Radantrieben, am Hinterachsdifferenzial. Insbesondere ist die erfindungsgemäße Strebe aufgrund ihrer hohen Gesamtsteifigkeit geeignet um das NVH-Verhalten der Karosserie gezielt zu beeinflussen. Die Aufzählung ist jedoch nicht als abschließend aufzufassen, vielmehr ist es möglich die erfindungsgemäße Versteifungsstrebe an weiteren dem Fachmann geeignet erscheinenden Orten im Fahrzeug oder auch stationär einzusetzen.

Diese und weitere Vorteile werden durch die nachfolgende Beschreibung unter Bezug auf die begleitenden Figuren dargelegt. Der Bezug auf die Figuren in der Beschreibung dient dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1: eine perspektivische Ansicht der Versteifungsstrebe,
- Fig. 2: eine Schnittansicht der Versteifungsstrebe,
- Fig. 3: einen Anbindungsschuh zur Verwendung in einer erfindungsgemäßen Versteifungsstrebe.
- Fig. 4: eine Schnittansicht der Versteifungsstrebe mit Schraube und Montagehilfe

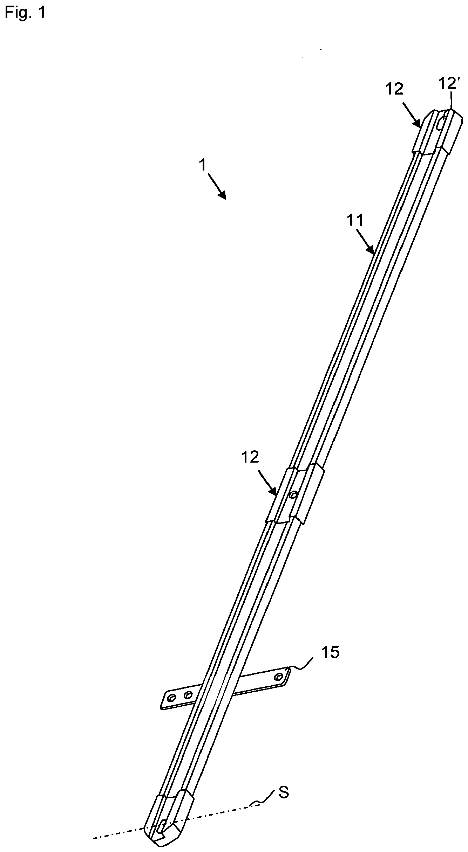

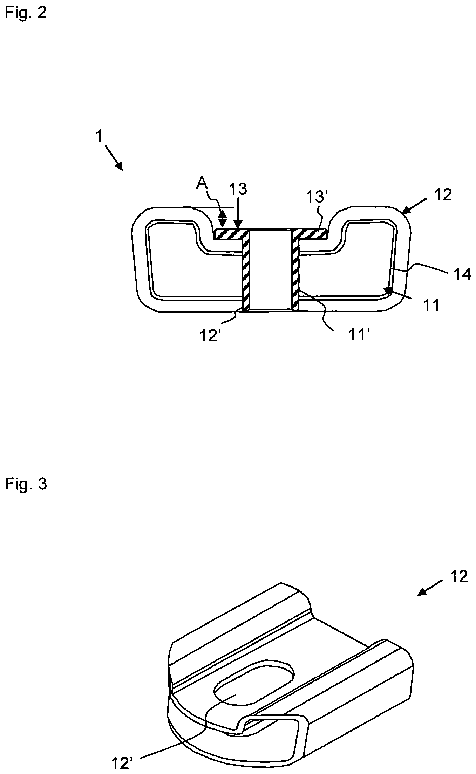

Fig. 1 zeigt eine erfindungsgemäße Versteifungsstrebe 1 aus einem langgestreckten U-förmiges Strebenprofil 11 auf. An den Enden des Strebenprofils 11 befinden sich die Anbindungsabschnitte, über die jeweils ein Anbindungsschuh 12 geschoben ist. In den Anbindungsabschnitten des Strebenprofils 11 liegt jeweils eine Durchgangsöffnung, die sich senkrecht zur Längsachse des Strebenprofils 11 erstreckt. Die beiden Anbindungsschuhe 12 haben jeweils auch eine Durchgangsöffnung 12', die deckungsgleich über der Durchgangsöffnung 11' des Strebenprofils 11 liegt (siehe Fig. 2). Zwischen den beiden endseitigen Anbindungsabschnitten befindet sich ein weiterer Anbindungsabschnitt, in dem auch eine Durchgangsöffnung 12' vorliegt und über den ebenfalls ein Anbindungsschuh 12 geschoben ist, der den gleichen Querschnitt hat, jedoch geringfügig kürzer ist und eine andere Außenkontur aufweist.

Die Anbindungsschuhe 12 weisen einen geschlossenen Querschnitt auf, wobei der Innenquerschnitt der Anbindungsschuhe 12 mit dem Außenquerschnitt des Strebenprofils 11 korrespondiert; es befindet sich also zwischen der Oberfläche des Strebenkörpers 11 und der Innenfläche der Anbindungsschuhe 12 ein Spalt.

Die erfindungsgemäße Versteifungsstrebe 1 wird als leichtgewichtiges Versteifungsbauteil in eine Kraftfahrzeugkarosserie montiert, beispielsweise als Versteifung am Unterboden, im Motorraum, zwischen Fahrwerksanbindungen und/oder zur Fixierung von Antriebskomponenten, was jedoch nicht figurativ gezeigt ist. Dazu wird durch die Durchtrittsöffnungen 11',12' des Strebenkörpers 11 und der Anbindungsschuhe 12 jeweils eine Befestigungsvorrichtung (z. B. eine Schraube) gesteckt und mit der Karosserie verbunden. Der Schraubenschaft ist jeweils passgenau von den Durchtrittsöffnungen aufgenommen, sodass Kräfte formschlüssig von der Schraube auf die Versteifungsstrebe 1 übertragen werden können. Es treten keine Steifigkeitssprünge wie bei bekannten faserverstärkten Versteifungsstreben auf, bei denen die Anbindungsschuhe nur endseitig ähnlich einem Ringkabelschuh aufgeklebt sind und die Schraube nicht durch das Strebenprofil 11 gesteckt ist. Die effektive Gesamtsteifigkeit der Versteifungsstrebe 1 ergibt sich bei der vorliegenden Versteifungsstrebe maßgeblich durch die Steifigkeit des Strebenprofils 11; sie wird nicht durch eine vergleichsweise nachgiebige Klebeverbindung gemindert.

Die Anbindungsschuhe 12 sind in einem vorteilhaften Beispiel, aber nicht zwingend, bei der erfindungsgemäßen Versteifungsstrebe 1 zusätzlich mit Kleberüberschuss mit dem Strebenprofil 11 verklebt, um zu verhindern, dass Feuchtigkeit oder Schmutz zwischen die Anbindungsschuhe 12 und das Strebenprofil 11 eindringen. So kann Korrosion an den Verstärkungsfasern effektiv verhindert werden und auch die schädlichen Auswirkungen abrasiver Schmutzpartikel werden vermieden. Der Klebstoff dient aber neben der Abdichtung des Spaltes zwischen dem Strebenprofil 11 und den Anbindungsschuhen 12 auch der hilfsweisen Fixierung des Anbindungsschuhs 12 bei der Montage der Versteifungsstrebe 1, da die Montage ansonsten sehr schwierig wäre.

Der Schraubenkopf einer zur Monatage verwendeten Schraube ragt in montiertem Zustand nicht über den Anbindungsschuh 12 hinaus, was beispielsweise bei einer Montage der Versteifungsstrebe 1 am Unterboden mit Vorteilen hinsichtlich der Bodenfreiheit verbunden ist. Ferner bietet der U-förmige Querschnitt des Strebenprofils 11 den Vorteil, dass bei relativ geringem Gewicht ein hohes Widerstandsmoment sowie eine vergleichsweise hohe Sicherheit gegen Ausknicken bereitgestellt werden kann. Dies ist insbesondere in einer Aufprallsituation vorteilhaft, da die erfindungsgemäße Strebe dadurch länger intakt bleibt und größere Energiemengen weiterleiten kann. Die Sicherheit gegen Ausknicken bei Druckbelastung wird zusätzlich auch noch durch den dritten mittig auf dem Strebenprofil 11 angeordneten Anbindungsabschnitt erhöht, der die Versteifungsstrebe 1 zusätzlich quer der Längsachse führt.

Darüber hinaus ist quer zum Strebenprofil 11 ein Befestigungsband 15 mit dem Strebenprofil 11 verbunden, das die Montage der Versteifungsstrebe 1 erleichtern soll. Bevor die Anbindungsabschnitte mit der Kraftfahrzeugkarosserie verbunden werden, wird die Versteifungsstrebe 1 hilfsweise mit dem Befestigungsband 15 fixiert, so dass die Montage von einem Monteur alleine ausgeführt werden kann.

In Fig. 2 ist ein Querschnitt der Versteifungsstrebe dargestellt, wobei der Schnitt an der in der Fig. 1 dargestellten Schnittebene S liegt. Es ist zu erkennen, dass sich zwischen dem Strebenprofil 11 und dem Anbindungsschuh 12 ein Spalt 14 befindet. Dieser Spalt 14 ist mit einem Klebstoff ausgefüllt, wobei bei der Fertigung der erfindungsgemäßen Versteifungsstrebe 1 (siehe Fig. 1) darauf zu achten ist, dass ein Klebstoffüberschuss verwendet wird, so dass sich an den Kanten des Anbindungsschuhs 12 ein Klebstoffkragen ausbilden kann, der das Eindringen von Feuchtigkeit und/oder Schmutz zwischen den Anbindungsschuh 12 und das Strebenprofil 11 verhindert. Der Klebstoff kann für eine möglichst steife Klebeverbindung auch Feststoffpartikel wie etwa Glaskugeln beinhalten, wodurch sichergestellt werden soll, dass der Spalt 14 an jeder Stelle die gleiche Spaltweite hat.

Darüber hinaus ist eine Bundhülse 13 zu erkennen die durch die korrespondierenden Durchtrittsöffnungen 11',12' des Strebenprofils 11 und des Anbindungsschuhs 12 gesteckt ist. Der Bund 13' der Bundhülse liegt dabei auf dem Anbindungsschuh 12 auf. Durch die Bundhülse 13 wird dann bei der Montage der Strebe die Schraube gesteckt und mit der Karosserie verbunden. Die Bundhülse 13 erstreckt sich entlang der Längsachse der Durchtrittsöffnung 12' bis zur anderen Seite des Anbindungsschuhs 12, so dass auch unter Einwirkung einer Schraubenvorspannkraft keine Druckkraft auf das Strebenprofil ausgeübt wird; die Schraubenvorspannkraft wird komplett durch die Bundhülse 13 geleitet. Hierdurch kann Setzen des Werkstoffs des faserverstärkten Strebenprofils wirksam vorgebeugt werden. Ferner eignet sich die beschriebene Konstruktion mit Bundhülse 13 auch dazu, die Variantenanzahl der erfindungsgemäßen Versteifungsstrebe 1 zu reduzieren; um beispielsweise an verschiedenen Kraftfahrzeugkarosserie mit unterschiedlichem Schraubendurchmesser befestigt zu werden, kann einfach eine Bundhülse 13 mit einem anderem Innendurchmesser eingesetzt werden. Auch mit montierter Bundhülse 13 ist der Abstand A, der sich zwischen dem Bund 13' und der Oberseite des Anbindungsschuhs 12 ergibt, immer noch groß genug, dass ein Schraubenkopf nicht über den Anbindungsschuh 12 hinaus ragt und somit auch die Bauhöhe nicht vergrößert.

In Fig. 3 ist der Anbindungsschuh 12, wie er für die endseitigen Anbindungsabschnitte der erfindungsgemäßen Versteifungsstrebe 1 (siehe Fig. 1) verwendet wird, dargestellt. Es ist gut zu erkennen, dass der Querschnitt geschlossen ist und der Innenquerschnitt mit dem Außenquerschnitt des Strebenprofils 11 (ebenfalls Fig. 1) korrespondiert. Die Durchtrittsöffnung 12' befindet sich in montiertem Zustand der Versteifungsstrebe über der deckungsgleichen Durchgangsöffnung des Strebenprofils 11. Ein analog aufgebauter Anbindungsschuh 12 kann auch für den mittig auf der Versteifungsstrebe angeordneten Anbindungsabschnitt verwendet werden. Der Anbindungsschuh 12 kann vorteilhaft schnell und günstig mittels Extrudieren oder Strangpressen aus einem metallischen Ausgangsmaterial hergestellt werden. Aus einem Extrudat bzw. Rohprofil können auch unterschiedliche Anbindungsschuhe 12 hergestellt werden, die sich beispielsweise durch Form und Größe Ihrer Durchtrittsöffnungen 12', ihrer Länge und/oder der Randkontur unterscheiden. Durch einfaches Ablängen in Kombination mit anderen üblichen Fertigungsverfahren können die Anbindungsschuhe günstig, in großer Stückzahl und gut automatisierbar hergestellt werden.

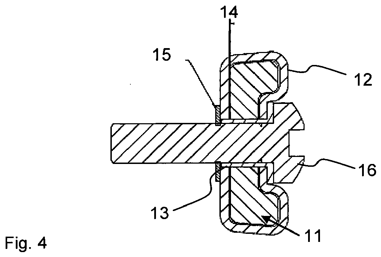

In Fig. 4 ist ein Querschnitt der Versteifungsstrebe vor der Montage mit fixierter Schraube 16 dargestellt, wobei der Schnitt an der in der Fig. 1 dargestellten Schnittebene S liegt. Die Schraube 16 ist durch die Bundhülse 13 durchgesteckt und mittels einer Montagehilfe 15 fixiert. In diesem Zustand ist der Spalt 14 bereits mit Klebstoff gefüllt. Zur Montage an das Bauteil der Karosserie, zum Beispiel an den Unterboden eines Kraftfahrzeugs, wird die Montagehilfe 15 entfernt und die Schraube 16 auf am Karosseriebauteil festgezogen.
Die Bundhülse ist bei noch nicht fest gezogener Schraube bevorzugt etwas kürzer als zum Aufliegen bzw. Berühren des Karosseriebauteils erforderlich wäre. Hierdurch kann der Anbindungsschuh und der Klebespalt beim Festziehen der Schraube etwas zusammengepresst werden, ohne dass die Bundhülse dagegen Widerstand leistet.

## Patentansprüche

1. Faserverstärkte Versteifungsstrebe (1),
die ein langgestrecktes Strebenprofil (11) aus einem faserverstärkten Kunststoff (FVK) und zumindest einen endseitigen Anbindungsabschnitt aufweist, in dem zumindest eine Durchtrittsöffnung (11') senkrecht zu der Längsachse des Strebenprofils (11) vorliegt,
wobei
der zumindest eine Anbindungsabschnitt einen Anbindungsschuh (12) mit einem geschlossenen Querschnitt aufweist, der über das Strebenprofil (11) geschoben ist, wobei der Innenquerschnitt des Anbindungsschuhs (12) mit dem Außenquerschnitt des Strebenprofils (11) korrespondiert und der Anbindungsschuh (12) eine Durchtrittsöffnung (12') aufweist, die zumindest teilweise über der Durchtrittsöffnung (11') des Strebenprofils (11) liegt.
**dadurch gekennzeichnet, dass**
das Strebenprofil (11) einen U-förmigen Querschnitt aufweist.

2. Herstellverfahren für eine faserverstärkte Versteifungsstrebe (1) nach Anspruch 1, umfassend die Schritte:
a) Bereitstellen des Strebenprofils (11), des zumindest einen Anbindungsschuhs (12) und des Klebstoffs,
b) Auftragen eines Klebstoffüberschusses auf den endseitigen Anbindungsabschnitt des Strebenprofils (11) und/oder auf eine Innenfläche des Anbindungsschuhs (12),
c) Positionieren des Anbindungsschuhs (12) in dem endseitigen Anbindungsabschnitt des Strebenprofils (11), sodass die Durchtrittsöffnung (12') des Anbindungsschuhs (12) zumindest teilweise über der Durchtrittsöffnung (11') des Strebenprofils (11) liegt,
d) Ausbilden eines Klebstoffkragens an zumindest einer Kontaktkante der Anbindungsschuhe (12) und des Strebenprofils (11).

3. Herstellverfahren nach Anspruch 2,
wobei nach dem Schritt d) der Schritt
e) Bereitstellen einer Hülse (13) und Einführen der Hülse (13) in die zumindest teilweise übereinander liegenden Durchtrittsöffnungen (11'12') des Anbindungsschuhs (12) und des Strebenprofils (11) erfolgt.

4. Kraftfahrzeugkarosserie mit zumindest einer Versteifungsstrebe,
**dadurch gekennzeichnet, dass**
die Versteifungsstrebe eine faserverstärkte Versteifungsstrebe (1) nach nach Anspruch 1 ist.

## Claims

1. Fibre-reinforced reinforcement strut (1),
comprising an elongated strut profile (11) made of a fibre-reinforced plastic material (FRP) and at least one end-side connecting section having at least one through-opening (11') perpendicular to the longitudinal axis of the strut profile (11),
wherein
the at least one connecting section has a connecting shoe (12) with a closed cross-section, which is pushed over the strut profile (11), the internal cross-section of the connecting shoe (12) corresponding to the external cross section of the strut profile (11) and the connecting shoe (12) having a through-opening (12'), which at least partially lies above the through-opening (11') of the strut profile (11),
**characterised in that**
the strut profile (11) has a U-shaped cross-section.

2. Method for producing a fibre-reinforced reinforcement strut (1) according to claim 1,
comprising the steps of:
a) the provision of the strut profile (11), the at least one connecting shoe (12) and the adhesive,
b) the application of excess adhesive to the end-side connecting section of the strut profile (11) and/or to an internal surface of the connecting shoe (12),
c) the positioning of the connecting shoe (12) in the end-side connecting section of the strut profile (11) in such a way that the through-opening (12') of the connecting shoe (12) at least partially lies above the through-opening (11') of the strut profile (11),
d) the formation of an adhesive collar on at least one contact edge of the connecting shoe (12) and the strut profile (11).

3. Production method according to claim 1,
wherein step d) is followed by step e), this being the provision of a sleeve (13) and the insertion of the sleeve (13) through the through openings (11', 12') of the connecting shoe (12) and the strut profile (11), which at least partially lie on top of each other.

4. Vehicle body having at least one reinforcement strut,
**characterised in that**
the reinforcement strut is a fibre-reinforced reinforcement strut (1) according to claim 1.

## Revendications

1. Jambe de force (1) renforcée par des fibres, qui présente un profilé (11) d'étayage allongé constitué d'une matière plastique renforcée par des fibres (FVK) et au moins une partie de liaison côté extrémité, dans laquelle au moins une ouverture (11') de passage est présente perpendiculairement à l'axe longitudinal du profilé (11) d'étayage, l'au moins une partie de liaison présentant un patin de liaison (12) ayant une section transversale fermée, qui se coulisse dans le profilé (11) d'étayage, la section transversale intérieure du patin de liaison (12) correspondant à la section transversale extérieure du profilé (11) d'étayage et le patin de liaison (12) présentant une ouverture (12') de passage qui au moins à certains endroits est aménagée au-dessus de l'ouverture (11') de passage du profilé (11) d'étayage, **caractérisée en ce que** le profilé (11) d'étayage présente une section transversale sus la forme de U.

2. Procédé de fabrication pour une jambe de force (1) renforcée par des fibres selon la revendication 1, comprenant les étapes consistant à :
a) fournir le profilé (11) d'étayage, l'au moins un patin de liaison (12) et la colle,
b) appliquer l'excédent de colle sur la partie de liaison côté extrémité du profilé (11) d'étayage et/ou sur une surface intérieure du patin de de liaison (12),
c) positionner le patin de liaison (12) dans la partie de liaison côté extrémité du profilé (11) d'étayage, de telle sorte que l'ouverture (12') de passage du patin de liaison (12) se trouve au moins à certains endroits au-dessus de l'ouverture (11') de passage du profilé (11) d'étayage ;
d) former une collerette de colle sur au moins un bord de contact du patin de liaison (12) et du profilé (11) d'étayage.

3. Procédé de fabrication selon la revendication 2, l'étape d) étant suivie par l'étape suivante consistant à :
e) fournir une douille (13) et introduire la douille (13) dans les ouvertures de passage (11', 12') se superposant à certains endroits, du patin de liaison (12) et du profilé (11) d'étayage.

4. Carrosserie de véhicule automobile comprenant au moins une jambe de force, **caractérisée en ce que** la jambe de force est une jambe de force (1) renforcée par des fibres selon la revendication 1.
